# FASCICULE DE BREVET EUROPEEN

(11) **EP 3 838 724 B1**
(45) Date de publication et mention de la délivrance du brevet: **16.08.2023**
(21) Numéro de dépôt: 20212346.9
(22) Date de dépôt: 08.12.2020
(51) Int. Cl.: B62D 35/02, B62D 37/02, B62D 35/00

(54) **VÉHICULE AUTOMOBILE COMPORTANT AU MOINS UN DISPOSITIF DÉFLECTEUR AÉRODYNAMIQUE**
KRAFTFAHRZEUG, EINSCHLIESSLICH EINES AERODYNAMISCHEN DEFLEKTORGERÄTS
MOTOR VEHICLE INCLUDING AT LEAST ONE AERODYNAMIC DEFLECTOR DEVICE

(30) Priorité: 19.12.2019 FR 1914820
(43) Date de publication de la demande: 23.06.2021
(73) Titulaire: Renault s.a.s, 92100 Boulogne Billancourt (FR)
(72) Inventeur: BURNIER-DECHON, Lionel, 91120 Palaiseau (FR); PERREUX, PHILIPPE, 78620 L'ETANG LA VILLE (FR); PIN, Michael, 78910 PRUNAY LE TEMPLE (FR)
(74) Mandataire: Renault Group

(56) Documents cités:
- EP-A1- 3 178 730
- FR-A1- 3 074 134
- US-A1- 2019 106 163
- US-B1- 9 102 366

## Description

L'invention se rapporte à un véhicule automobile comportant au moins un dispositif déflecteur aérodynamique comprenant un organe déflecteur se disposant à l'avant d'un véhicule automobile, en particulier à l'avant d'une roue avant, ledit organe déflecteur étant apte à dévier l'air arrivant sous le véhicule lorsque celui-ci avance à une certaine vitesse.

L'aérodynamisme d'un véhicule est un paramètre de premier ordre pour limiter la consommation de carburant et donc réduire les émissions de polluants notamment de CO2 dans le cas d'un véhicule à moteur thermique, et également pour augmenter l'autonomie d'un véhicule électrique. Des formes adaptées du véhicule ainsi que des composants dédiés participent ainsi à réduire les pertes d'énergie dues à la pénétration du véhicule dans l'air. En revanche certaines pièces du véhicule, tout en assurant certaines prestations, contribuent à accentuer les pertes d'énergie d'origine aérodynamiques. Ainsi les roues, et plus particulièrement les roues avant, opposent une résistance à l'avancement du véhicule et perturbent l'écoulement des flux d'air sous et autour dudit véhicule. Afin de réduire au maximum les pertes d'énergie et orienter au mieux les flux d'air venant de l'avant vers les roues, il a été proposé de placer un dispositif comprenant deux déflecteurs aérodynamiques se plaçant unitairement devant une roue avant, sous le bouclier avant, et fixés sous le convergent (sous la voiture). Toutefois la hauteur de ces déflecteurs aérodynamiques est nécessairement limitée afin de permettre le passage du véhicule sur des obstacles usuellement présents en milieu urbain (ralentisseurs, trottoirs, etc.) sans détériorer les déflecteurs.

Dans la demande de brevet DE 102010037616 A1, on a proposé un véhicule comprenant un système à deux déflecteurs aérodynamiques, un par roue avant. Chaque déflecteur est composé de deux lames, une grande lame et une petite lame disposées perpendiculairement entre elles, et il est pivotable en fonction de la pression de l'air entre une position active dans laquelle la grande lame passe en position verticale et une position inactive dans laquelle la petite lame passe en position verticale, une liaison élastique à l'intersection desdites lames permettant le pivotement du déflecteur entre ces deux positions relatives à la vitesse d'avancement du véhicule . Le flux d'air qui arrive sous le véhicule initie le pivotement de l'organe déflecteur par pression sur la petite lame qui est à la verticale sous le véhicule, et au fur et à mesure que la vitesse du véhicule augmente, la grande lame qui commence à se positionner à l'oblique vers le bas sous le véhicule est soumise à la pression du flux d'air qui la pousse vers l'arrière pour faire pivoter l'organe déflecteur jusqu'à 90 degrés par rapport à sa position au repos, la grande lame venant à la verticale sous le véhicule pour dévier l'air arrivant sous le véhicule, notamment au niveau d'une roue du véhicule.

La grande lame est ainsi apte à dévier l'air autour d'une roue pour un véhicule avançant à une vitesse de route assez élevée, et ledit déflecteur est adaptable à une circulation en milieu urbain grâce à la petite lame qui est d'une hauteur permettant le passage sur des obstacles urbains courants (par exemple ralentisseur, bordure de trottoir), la petite lame passant à la verticale sous le véhicule quand ledit véhicule avance à une vitesse basse.

Un inconvénient d'un tel système déflecteur est le besoin d'une petite lame pour initier le pivotement de l'organe déflecteur. Un autre inconvénient est que cette petite lame est d'une surface modeste, qui peut s'avérer insuffisante pour entraîner convenablement le pivotement de l'organe déflecteur, c'est-à-dire pour réussir le passage de la grande lame vers sa position aéroactive. De plus cette petite lame, bien que de faible hauteur, peut s'avérer gênante si le véhicule doit passer sur certains obstacles trop surélevés ou inhabituels.

On connait également le document FR 3 074 134 A1 qui décrit un dispositif déflecteur comprenant un conduit d'amenée d'air situé à l'avant d'un véhicule, la sortie d'air se faisant sur l'arrière d'une lame déflectrice vers la chaussée, la lame étant en outre orientée vers l'arrière du véhicule en position inactive.

L'invention vise à résoudre, au moins en partie, ces inconvénients.

A cet effet, l'invention propose un véhicule automobile comportant au moins un dispositif déflecteur aérodynamique comprenant un organe déflecteur disposé en la partie avant dudit véhicule, et ledit organe comprenant une lame déflectrice, présentant une surface apte à dévier des filets d'air passant sous le véhicule lorsque ce dernier roule en marche avant, qui est montée de manière mobile la rendant apte à passer réversiblement d'une position allongée vers l'avant du véhicule et suivant la direction longitudinale du véhicule à une position aéroactive en fonction de la vitesse du véhicule en marche avant. Selon l'invention ledit dispositif aérodynamique comprend des moyens de guidage d'un flux d'air arrivant de l'avant du véhicule vers ladite lame déflectrice, au moins quand ladite lame déflectrice est en position allongée vers l'avant du véhicule et suivant la direction longitudinale du véhicule, autrement dit quand ladite lame est en position inactive, soit aussi en position sensiblement à l'horizontale par rapport au plancher du véhicule.

L'invention présente ainsi l'avantage de pouvoir canaliser un flux d'air vers la lame déflectrice grâce auxdits moyens de guidage d'un flux d'air arrivant de l'avant du véhicule vers ladite lame déflectrice, ce qui permet de pousser la lame vers sa position active quand ce flux d'air atteint une pression suffisante.

De préférence selon l'invention, lesdits moyens de guidage d'un flux d'air arrivant de l'avant du véhicule vers ladite lame sont formés d'un conduit. En particulier lesdits moyens de guidage ont une direction axiale principale qui s'étend principalement dans un plan sensiblement incliné par rapport à la direction longitudinale du véhicule.

De préférence selon l'invention, lesdits moyens de guidage du flux d'air arrivant de l'avant du véhicule vers ladite lame comportent au moins un orifice d'entrée d'air formé par un orifice supérieur qui permet l'entrée d'un flux d'air arrivant sur l'avant du véhicule, et au moins un orifice de sortie d'air formé par un orifice inférieur débouchant au-dessus de ladite lame en position allongée vers l'avant du véhicule et suivant la direction longitudinale du véhicule.

De préférence selon l'invention, lesdits moyens de guidage d'un flux d'air arrivant de l'avant du véhicule vers ladite lame ont une forme coudée. En particulier ils sont formés par un conduit coudé.

Avantageusement selon l'invention, l'organe déflecteur comporte une unique lame, cette lame constituant la lame déflectrice dudit dispositif.

De préférence selon l'invention, ledit dispositif déflecteur aérodynamique comprend un support supportant ledit organe réflecteur. En particulier ledit support peut soutenir au moins en partie lesdits moyens de guidage du flux d'air vers ladite lame, en particulier la partie inférieure desdits moyens de guidage.

En particulier selon l'invention, ledit support présente une face inférieure et une face supérieure, et ledit organe réflecteur est solidarisé à la face inférieure dudit support et de sorte que ladite lame déflectrice puisse venir en butée contre ladite face inférieure du support lorsque cette lame vient en position allongée vers l'avant du véhicule et suivant la direction longitudinale du véhicule.

Selon un mode de réalisation préféré de l'invention, ledit support comprend une fente traversante formant passage pour ledit flux d'air guidé par lesdits moyens de guidage vers ladite lame. En particulier, l'orifice de sortie d'air desdits moyens de guidage du flux d'air vers ladite lame, débouche dans ladite fente traversante. Lesdits moyens de guidage du flux d'air vers ladite lame peuvent reposer au moins partiellement sur la face supérieure dudit support.

Selon un mode de réalisation particulier de l'invention, l'orifice d'entrée d'air desdits moyens de guidage du flux d'air vers ladite lame est intégré dans un trou traversant récepteur que comporte le bouclier avant dudit véhicule, en particulier la partie latérale avant dudit bouclier avant. En particulier la partie du conduit définissant l'orifice d'entrée d'air est ainsi intégrée dans le bouclier.

De préférence, ledit dispositif comprend des moyens de rappel contrôlant le passage réversible de ladite lame déflectrice entre une position allongée vers l'avant du véhicule et suivant la direction longitudinale du véhicule et une position aéroactive (à la verticale), et en particulier en fonction d'une vitesse de référence pour le véhicule.

Par exemple, ladite vitesse de référence du véhicule est choisie à une valeur comprise entre une vitesse maximale autorisée en ville et une vitesse autorisée sur route (hors ville) ou autoroute. Par exemple ladite vitesse de référence est choisie entre 50 km/h et 80 km/h.

Plus particulièrement, lesdits moyens de rappel peuvent se présenter sous forment d'un ressort de rappel intervenant en compression, d'une raideur calibrée selon ladite vitesse de référence du véhicule.

De préférence selon l'invention, ladite lame déflectrice est solidarisée à des moyens de rotation. De préférence lesdits moyens de rotation se présentent sous forme d'un axe de rotation auquel est solidarisée ladite lame.

De préférence selon l'invention, ledit organe déflecteur comprend lesdits moyens de rotation qui comprennent un axe de rotation autour duquel ladite lame déflectrice est montée pivotante, en particulier entre une position allongée orientée vers l'avant du véhicule (position sensiblement horizontale par rapport au plancher du véhicule) et une position sensiblement verticale et orientée vers le bas du véhicule (position aéroactive de ladite lame à la verticale et vers le bas par rapport au plancher du véhicule).

De préférence ledit organe déflecteur se dispose sous le plancher de la partie avant dudit véhicule.

Selon un mode préféré de réalisation de l'invention, ledit organe déflecteur se dispose à l'avant d'une roue dudit véhicule, en particulier devant une roue avant dudit véhicule. En particulier ladite lame déflectrice s'étend sensiblement suivant la direction transversale du véhicule sur une zone correspondant sensiblement à la largeur de la roue devant laquelle elle est placée.

D'autres particularités et avantages de l'invention ressortiront à la lecture de la description faite ci-après d'un mode de réalisation particulier de l'invention, donné à titre indicatif mais non limitatif, en référence aux dessins annexés pour lesquels
[Fig. 1] illustre schématiquement, suivant une vue en perspective, un dispositif déflecteur aérodynamique, représenté en coupe longitudinale, en situation inactive, supporté par une portion de la partie avant d'un véhicule automobile selon l'invention;
[Fig. 2] illustre schématiquement, suivant une vue en perspective, un dispositif déflecteur aérodynamique, représenté en coupe longitudinale, en situation aéroactive, supporté par une portion de la partie avant d'un véhicule automobile selon l'invention;
[Fig. 3] illustre schématiquement, suivant une vue en perspective partielle d'une partie avant d'un véhicule automobile comprenant un dispositif déflecteur aérodynamique selon l'invention, en situation aéroactive.

Les orientations exprimées dans la description des figures sont données en référence au repère XYZ classique du véhicule dans lequel X représente la direction longitudinale avant-arrière du véhicule, orientée vers l'arrière, Y la direction transversale du véhicule, orientée vers la droite, et Z la direction verticale orientée vers le haut du véhicule.

Les termes « gauche » et « droit » font référence aux côtés usuels respectivement gauche et droit du véhicule, sauf précision contraire.

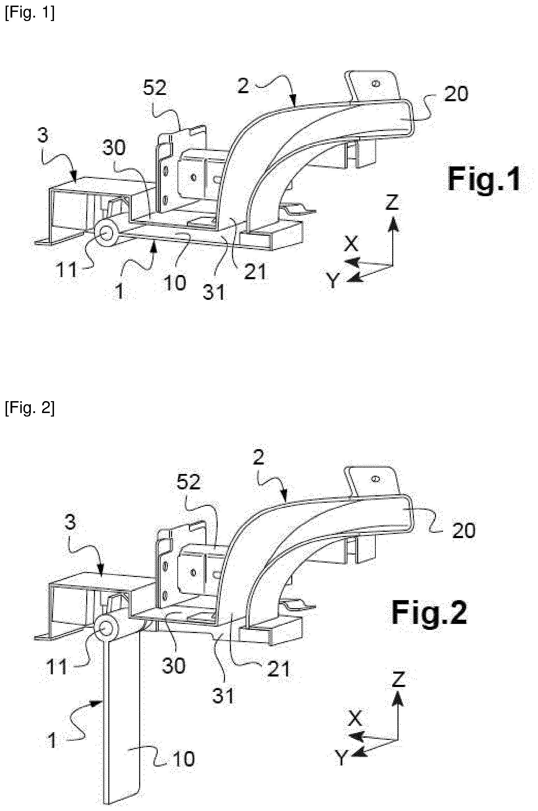

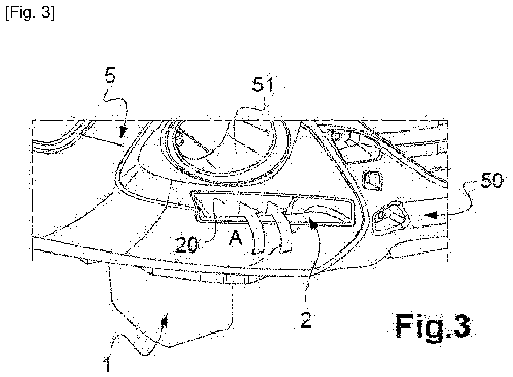

Comme illustré sur les figures 1 à 3, le dispositif déflecteur aérodynamique comprend un organe déflecteur 1 et des moyens de guidage d'un flux d'air 2 vers ledit organe déflecteur 1. Cet ensemble organe déflecteur 1 et moyens de guidage d'air 2 est représenté en figure 3, monté sur la partie avant droite d'une structure avant d'un véhicule automobile.

Lesdits moyens de guidage d'un flux d'air 2 vers ledit organe déflecteur 1 se présentent sous forme d'un conduit 2, comme plus particulièrement visible sur les figures 1 et 2, représentant ledit dispositif en coupe longitudinale (plan XZ).

Ledit organe déflecteur comprend une unique lame déflectrice 10 apte à passer réversiblement, en fonction de la vitesse d'avancement du véhicule, d'une position sensiblement horizontale, dite aussi position haute ou position inactive (figure 1) vers une position sensiblement verticale, dite aussi position basse ou position aéroactive (figure 2), en s'étendant vers la bas sous la structure dudit véhicule, c'est-à-dire sensiblement selon la direction -Z. Ladite lame est solidaire d'un axe de rotation 11 autour duquel elle peut se déplacer en rotation, au moins suivant un arc de cercle d'environ 90 degrés. Ladite lame 10 passe en position verticale, quand la vitesse d'avancement du véhicule devient supérieure à une vitesse haute de référence. Ce passage se fait grâce au conduit d'air 2.

Ledit conduit d'air 2 est coudé, et comprend un orifice d'entrée d'air 20, constituant son orifice supérieur, qui permet l'entrée du flux d'air arrivant sur la partie avant du véhicule qui roule en marche avant, et il comprend un orifice de sortie d'air 21, constituant son orifice inférieur, qui débouche au-dessus de ladite lame déflectrice 10, notamment lorsque celle-ci est en position horizontale. Cet ensemble permet de concentrer un flux d'air arrivant sur la partie avant du véhicule, flux entré par l'orifice supérieur 20, directement vers ladite lame 10, et ainsi d'appliquer une pression de poussée sur ladite lame qui permet d'activer le mouvement de pivotement de ladite lame vers sa position verticale quand le véhicule avance à une vitesse relativement élevée, en particulier supérieure à une vitesse haute de référence. Aucun apport d'énergie supplémentaire comme par exemple celle d'un moteur électrique pour entraîner la lame déflectrice 10 n'est nécessaire grâce auxdits moyens de guidage d'un flux l'air 2 vers ladite lame déflectrice.

Ledit dispositif déflecteur d'air comprend, selon l'exemple, un support 3 auquel est solidarisé ledit axe de rotation 11 de ladite lame déflectrice 10, et logeant ladite lame en position horizontale. Ledit support 3 s'étend longitudinalement (direction X) et présente une partie de paroi avant 30 sensiblement horizontale, ledit axe de rotation 11 étant situé juste à l'arrière de cette partie de paroi avant. Cette partie de paroi avant présente un espace en sa face inférieure longitudinale dans lequel se loge ladite lame déflectrice 10 lorsqu'elle est en position horizontale (figure 1). En outre ladite partie de paroi avant 30 dudit support comprend une fente traversante 31 dans laquelle débouche l'orifice inférieur 21 du conduit d'air 2, de sorte qu'un flux d'air arrivant à l'avant du véhicule et entré dans ledit conduit d'air 2 est dirigé directement sur ladite lame déflectrice 10 qui est en position allongée, suivant la direction longitudinale du véhicule. Ladite partie de paroi avant 30 dudit support forme aussi une butée de course de ladite lame 10 vers l'avant, lorsque ladite lame revient en position horizontale.

Ledit dispositif déflecteur d'air peut comprendre en outre des moyens de rappel non représentés ou non visibles sur les figures 1 à 3 permettant de ramener ladite lame déflectrice 10 vers sa position horizontale quand la poussée exercés par les filets d'air passant sous le véhicule est faible, en lien avec la vitesse du véhicule qui est relativement basse. Ces dits moyens de rappel peuvent être par exemple un ressort de rappel en compression calibré à cet effet, c'est-à-dire choisi en fonction de sa raideur.

Ledit organe déflecteur 1 et son support 3 se montent sous la caisse du véhicule, par exemple devant une roue avant du véhicule (roue droite avant selon l'exemple non représentée sur les figures) et à l'arrière du bouclier avant 50.

Par exemple, l'organe déflecteur est placé plus ou moins face à la bande de roulement du pneu. Ladite lame déflectrice 10 dudit organe déflecteur s'étend ainsi transversalement (direction Y) sur une zone correspondant sensiblement à la largeur de la roue (soit du pneu).

Lesdits moyens de guidage 2 de l'air arrivant sur la partie avant du véhicule vers ladite lame 10 sont disposés, par exemple sensiblement latéralement, sur un côté avant de la partie avant du véhicule 5, côté avant droit selon l'exemple en figure 3. L'orifice supérieur 20 dudit conduit d'air 2 est encastré dans un trou récepteur creusé dans le bouclier 50, par exemple en dessous de l'emplacement récepteur du phare droit 51. La partie principale du conduit passe sur le côté extérieur d'un longeron avant 52 qui supporte le bouclier 50. Ledit conduit est coudé selon un angle permettant que l'orifice de sortie d'air 21 (orifice inférieur du conduit) débouche dans la fente traversante 31 du support 3. Cette partie avec l'orifice inférieur 21 du conduit 2 est maintenue au niveau de cette fente 31 par des moyens appropriés, à la portée de l'homme du métier. Le flux d'air A qui circule à l'avant du véhicule est ainsi conduit de l'orifice d'entrée 20 dudit conduit d'air 2 vers l'orifice de sortie 21 pour arriver directement sur la lame 10 quand elle est en position horizontale sous la partie de paroi avant 30 du support 3.

Lorsque le véhicule roule en marche avant, à basse vitesse, soit à une vitesse inférieure à une vitesse limite dite vitesse basse de référence, par exemple la plus grande vitesse autorisée en agglomération, soit par exemple à une vitesse inférieure à 50 km/h, la lame déflectrice 10 est en position haute (position initiale escamotée sous la partie de paroi avant 30 du support 3), c'est-à-dire en position sensiblement horizontale , ou en d'autres termes en position allongée suivant la direction longitudinale du véhicule et orientée vers l'avant du véhicule. Les flux d'air arrivant de l'avant du véhicule et canalisés par le conduit d'air 2 exercent une poussée assez faible sur ladite lame, de sorte qu'elle peut rester sensiblement horizontale.

Au fur et à mesure que la vitesse du véhicule augmente, et passe au-dessus de la vitesse basse de référence, par exemple vers 60 ou 70 km/h, sous la poussée du flux d'air canalisé par ledit conduit 2 qui augmente, la lame déflectrice 10 est poussée vers le bas et vers l'arrière, ce qui fait qu'elle est entraînée en rotation autour de l'axe de rotation 11 jusqu'à venir en position sensiblement verticale suivant la direction -Z (position finale déployée) devant la roue quand la vitesse du véhicule atteint une vitesse d'au moins une vitesse haute de référence, par exemple 80 ou 90 km/h. Ladite lame occupe un espace descendant au plus bas devant la roue la rendant aéroactive, c'est-à-dire de manière à dévier au mieux les filets d'air se dirigeant vers la roue en question. L'air est dévié au centre du véhicule et aussi le cas échant sur les côtés.

Si on souhaite que le déflecteur ne soit en position basse (lame déflectrice verticale) qu'à partir d'une vitesse de référence, par exemple à partir de 80 km/h, le moyen de rappel tel qu'un ressort de compression est choisi de sorte que sa raideur s'oppose au moins partiellement à la pression de l'air exercée sur la lame déflectrice jusqu'à 80 km/h. Lorsque la vitesse du véhicule redescend en dessous de 80 km/h, notamment en dessous de 70 km/h, la pression de l'air exercée sur ladite lame diminue, la raideur du ressort devient plus élevée que la pression de l'air exercée sur ladite lame, et ainsi le ressort se détend en repoussant la lame déflectrice qui revient vers sa position allongée (horizontale).

Selon l'exemple non limitatif décrit, le véhicule est en pratique équipé symétriquement de deux dispositifs déflecteurs aérodynamiques, un dispositif par roue avant.

Selon l'invention, il n'est pas exclu que l'organe déflecteur puisse comprendre deux lames, une grande lame et une petite lame disposées perpendiculairement entre elles comme connu dans l'art antérieur, la grande lame étant disposée à l'avant de l'organe déflecteur et la petite lame à l'arrière dudit organe. Les moyens de guidage de l'air canalisant des flux d'air vers la grande lame qui est la lame déflectrice, formés par exemple par un conduit d'air tel que le conduit d'air 2 décrit pour les figures 1 à 3, venant faciliter le passage de ladite grande lame au repos (à l'horizontale) vers sa position aéroactive, c'est-à-dire à la verticale.

## Revendications

1. Véhicule automobile comportant au moins un dispositif déflecteur aérodynamique comprenant un organe déflecteur (1) disposé en la partie avant dudit véhicule, et ledit organe comprenant une lame déflectrice (10), présentant une surface apte à dévier des filets d'air passant sous le véhicule lorsque ce dernier roule en marche avant, qui est montée de manière mobile la rendant apte à passer réversiblement d'une position allongée vers l'avant du véhicule et suivant la direction longitudinale du véhicule à une position aéroactive en fonction de la vitesse du véhicule en marche avant, **caractérisé en ce que** ledit dispositif comprend des moyens de guidage (2) d'un flux d'air (A) arrivant de l'avant du véhicule vers ladite lame déflectrice (10) , au moins quand ladite lame déflectrice est en position allongée vers l'avant du véhicule et suivant la direction longitudinale du véhicule, en position inactive, et **en ce que** lesdits moyens de guidage (2) du flux d'air arrivant de l'avant du véhicule vers ladite lame déflectrice (10) comportent au moins un orifice d'entrée d'air (20) formé par un orifice supérieur qui permet l'entrée d'un flux d'air arrivant sur l'avant du véhicule, et au moins un orifice de sortie d'air (21) formé par un orifice inférieur débouchant au-dessus de ladite lame (10) en position allongée vers l'avant du véhicule et suivant la direction longitudinale du véhicule.

2. Véhicule selon la revendication 1, **caractérisé en ce que** lesdits moyens de guidage (2) d'un flux d'air arrivant de l'avant du véhicule vers ladite lame sont formés d'un conduit.

3. Véhicule selon l'une des revendications 1 ou 2, **caractérisé en ce que** lesdits moyens de guidage (2) d'un flux d'air arrivant de l'avant du véhicule vers ladite lame ont une forme coudée.

4. Véhicule selon l'une des revendications 1 à 3, **caractérisé en ce que** ledit dispositif déflecteur aérodynamique comprend un support (3) supportant ledit organe réflecteur (1).

5. Véhicule selon la revendication 4, **caractérisé en ce que** ledit support (3) présente une face inférieure et une face supérieure, et que ledit organe réflecteur est solidarisé à la face inférieure dudit support et de sorte que ladite lame déflectrice (10) puisse venir en butée contre ladite face inférieure du support lorsque ladite lame vient en position allongée vers l'avant du véhicule et suivant la direction longitudinale du véhicule.

6. Véhicule selon l'une des revendications 4 à 5, **caractérisé en ce que** ledit support (3) comprend une fente traversante (31) formant passage pour le flux d'air (A) guidé par lesdits moyens de guidage (2) vers ladite lame (10).

7. Véhicule selon l'une des revendications 1 à 6, **caractérisé en ce que** ledit orifice d'entré d'air (20) desdits moyens de guidage du flux d'air vers ladite lame est intégré dans un trou traversant récepteur que comporte le bouclier avant (50) dudit véhicule, en particulier la partie latérale avant dudit bouclier avant.

8. Véhicule selon l'une des revendications 1 à 7, **caractérisé en ce que** ledit dispositif comprend des moyens de rappel contrôlant le passage réversible de ladite lame déflectrice (10) entre une position allongée vers l'avant du véhicule et suivant la direction longitudinale du véhicule et une position aéroactive, et en particulier en fonction d'une vitesse de référence pour le véhicule.

9. Véhicule selon l'une des revendications 1 à 8, **caractérisé en ce que** ledit organe déflecteur (1) se dispose à l'avant d'une roue dudit véhicule, en particulier devant une roue avant dudit véhicule. 1

## Patentansprüche

1. Kraftfahrzeug mit mindestens einer aerodynamischen Deflektorvorrichtung, die ein im vorderen Teil des Fahrzeugs angeordnetes Deflektororgan (1) umfasst, und wobei das Organ eine Deflektorplatte (10) umfasst, die eine Fläche aufweist, die geeignet ist, unter das Fahrzeug gelangende Luftströmungen umzulenken, wenn dieses vorwärts fährt, die beweglich gelagert ist, was sie geeignet macht, in Abhängigkeit von der Geschwindigkeit des Fahrzeugs bei Vorwärtsfahrt reversibel aus einer zum Bug des Fahrzeugs hin und entlang der Längsrichtung des Fahrzeugs langgestreckten Position in eine aeroaktive Position überzugehen, **dadurch gekennzeichnet, dass** die Vorrichtung Leiteinrichtungen (2) zum Leiten eines vom Bug des Fahrzeugs kommenden Luftstroms (A) zu der Deflektorplatte (10) hin umfasst, mindestens, wenn die Deflektorplatte in der zum Bug des Fahrzeugs hin und entlang der Längsrichtung des Fahrzeugs langgestreckten Position ist, in der inaktiven Position, und dass die Leiteinrichtungen (2) zum Leiten des vom Bug des Fahrzeugs kommenden Luftstroms zu der Deflektorplatte (10) hin mindestens eine Lufteintrittsöffnung (20) beinhalten, die durch eine obere Öffnung gebildet wird, die das Eintreten eines am Bug des Fahrzeugs eintreffenden Luftstroms ermöglicht, und mindestens eine Luftaustrittsöffnung (21), die durch eine untere Öffnung gebildet wird, die oberhalb der Platte (10) in der zum Bug des Fahrzeugs hin und entlang der Längsrichtung des Fahrzeugs langgestreckten Position mündet.

2. Fahrzeug nach Anspruch 1, **dadurch gekennzeichnet, dass** die Leiteinrichtungen (2) zum Leiten eines vom Bug des Fahrzeugs kommenden Luftstroms zu der Platte hin aus einem Kanal gebildet werden.

3. Fahrzeug nach einem der Ansprüche 1 oder 2, **dadurch gekennzeichnet, dass** die Leiteinrichtungen (2) zum Leiten eines vom Bug des Fahrzeugs kommenden Luftstroms zu der Platte hin eine gekrümmte Form haben.

4. Fahrzeug nach einem der Ansprüche 1 bis 3, **dadurch gekennzeichnet, dass** die aerodynamische Deflektorvorrichtung einen Träger (3) umfasst, der das reflektierende Organ (1) trägt.

5. Fahrzeug nach Anspruch 4, **dadurch gekennzeichnet, dass** der Träger (3) eine Unterseite und eine Oberseite aufweist und dass das reflektierende Organ an der Unterseite des Trägers befestigt ist und so, dass die Deflektorplatte (10) gegen die Unterseite des Trägers in Anlage gelangen kann, wenn die Platte in die zum Bug des Fahrzeugs hin und entlang der Längsrichtung des Fahrzeugs langgestreckte Position gelangt.

6. Fahrzeug nach einem der Ansprüche 4 bis 5, **dadurch gekennzeichnet, dass** der Träger (3) einen durchgehenden Spalt (31) umfasst, der einen Durchlass für den von den Leiteinrichtungen (2) zu der Platte (10) hin geleiteten Luftstrom (A) bildet.

7. Fahrzeug nach einem der Ansprüche 1 bis 6, **dadurch gekennzeichnet, dass** die Lufteintrittsöffnung (20) der Leiteinrichtungen zum Leiten des Luftstroms zu der Platte hin in ein durchgehendes Aufnahmeloch integriert ist, das die Frontschürze (50) des Fahrzeugs, insbesondere der vordere seitliche Teil der Frontschürze, beinhaltet.

8. Fahrzeug nach einem der Ansprüche 1 bis 7, **dadurch gekennzeichnet, dass** die Vorrichtung Rückholmittel umfasst, die den reversiblen Übergang der Deflektorplatte (10) zwischen einer zum Bug des Fahrzeugs hin und entlang der Längsrichtung des Fahrzeugs langgestreckten Position und einer aeroaktiven Position steuern, und insbesondere in Abhängigkeit von einer Referenzgeschwindigkeit für das Fahrzeug.

9. Fahrzeug nach einem der Ansprüche 1 bis 8, **dadurch gekennzeichnet, dass** sich das Deflektororgan (1) an der Vorderseite eines Rads des Fahrzeugs positioniert, insbesondere vor einem Vorderrad des Fahrzeugs.

## Claims

1. Motor vehicle comprising at least one aerodynamic deflector device comprising a deflector member (1) positioned at the front part of said vehicle, and said member comprising a deflector blade (10) having a surface able to deflect streams of air passing beneath the vehicle when the latter is running in a forwards direction, and which is mounted such as to be able to move, making it able to pass reversibly from a position extending towards the front of the vehicle and in the longitudinal direction of the vehicle to an aerodynamically active position as a function of the speed of the vehicle travelling in a forwards direction, **characterized in that** said device comprises guide means (2) for guiding an air flow (A) arriving from the front of the vehicle towards said deflector blade (10), at least when said deflector blade is in the position extending towards the front of the vehicle and in the longitudinal direction of the vehicle, in the inactive position, and **in that** said guide means (2) for guiding the air flow arriving from the front of the vehicle towards said deflector blade (10) comprise at least one air inlet orifice (20) formed by an upper orifice that allows an air flow arriving at the front of the vehicle to enter, and at least one air outlet orifice (21) formed by a lower orifice opening above said blade (10) in the position extending towards the front of the vehicle and in the longitudinal direction of the vehicle.

2. Vehicle according to Claim 1, **characterized in that** said guide means (2) for guiding an air flow arriving from the front of the vehicle towards said blade are formed of a duct.

3. Vehicle according to either of Claims 1 and 2, **characterized in that** said guide means (2) for guiding an air flow arriving from the front of the vehicle towards said blade have a bent shape.

4. Vehicle according to one of Claims 1 to 3, **characterized in that** said aerodynamic deflector device comprises a support (3) supporting said reflector member (1).

5. Vehicle according to Claim 4, **characterized in that** said support (3) has a lower face and an upper face, and **in that** said reflector member is secured to the lower face of said support and in such a way that said deflector blade (10) can come into abutment against said lower face of the support when said blade comes into the position extending towards the front of the vehicle and in the longitudinal direction of the vehicle.

6. Vehicle according to either of Claims 4 and 5, **characterized in that** said support (3) comprises a through-slot (31) forming a passage for the air flow (A) guided by said guide means (2) towards said blade (10).

7. Vehicle according to one of Claims 1 to 6, **characterized in that** said air inlet orifice (20) of said guide means for guiding the air flow towards said blade is integrated into a receiving throughhole comprised in the front bumper (50) of said vehicle, particularly in the front lateral part of said front bumper.

8. Vehicle according to one of Claims 1 to 7, **characterized in that** said device comprises return means controlling the reversible passage of said deflector blade (10) between a position extending towards the front of the vehicle and in the longitudinal direction of the vehicle and an aerodynamically active position, particularly as a function of a reference speed of the vehicle.

9. Vehicle according to one of Claims 1 to 8, **characterized in that** said deflector member (1) is positioned in front of a wheel of said vehicle, particularly in front of a front wheel of said vehicle.
